# EUROPÄISCHE PATENTSCHRIFT

(11) **EP 2 027 982 B1**
(45) Veröffentlichungstag und Bekanntmachung des Hinweises auf die Patenterteilung: **27.10.2010**
(21) Anmeldenummer: 08019913.6
(22) Anmeldetag: 08.08.2006
(51) Int. Cl.: B29C 45/14, B29C 70/78, B29K 311/14

(54) **Verkleben und Beschichten von Rohstofflagen**
Sticking and layering raw material stores
Collage et revêtement de couches de matière première

(43) Veröffentlichungstag der Anmeldung: 25.02.2009
(62) Teilanmeldung aus: 06118602.9
(73) Patentinhaber: Novem Car Interior Design GmbH, 95519 Vorbach (DE)
(72) Erfinder: Manzoni, Antonio, 24060 Bagnatica (BG) (IT); Kumpf, Karl-August, 24060 Torro De Roveri (BG) (IT); Egerer, Gerhard, 92724 Trabitz (DE)
(74) Vertreter: Szynka, Dirk

(56) Entgegenhaltungen:
- EP-A- 1 676 688
- WO-A-2004/073951
- JP-A- 3 030 921
- US-B1- 6 887 413

## Beschreibung

Die vorliegende Erfindung bezieht sich auf ein Verfahren zur Herstellung eines Auskleidungsteils für Motorfahrzeuge.

Auskleidungsteile für Motorfahrzeuge sind weit verbreitert. Sie finden insbesondere bei der Inneneinrichtung von Motorfahrzeugen Anwendung. Ein typisches Auskleidungsteil ist etwa ein eine Holzmaserung aufweisendes Dekorationselement für ein Armaturenfeld in einem Auto. Unter dem Wort "Motorfahrzeug" werden hier alle motorisierten Land-, Wasser- oder Luftfahrzeuge mit einem Innenraum zur Beförderung von Personen, welcher typischerweise solche Auskleidungsteile aufweist, verstanden.

Oft weisen solche Auskleidungsteile einen beschichteten Rohling auf. Ein solcher kann mehrere Lagen aufweisen, welche üblicherweise in einem Presswerkzeug unter Druck und unter Wärmezufuhr mit einem Kleber verbunden werden. Die verschiedenen Lagen des Rohlings verleihen diesem die gewünschten mechanischen Eigenschaften und beeinflussen meist auch den optischen Eindruck des fertigen Auskleidungsteils.

Der fertige Rohling kann etwa mit Hilfe eines Spritzgießwerkzeuges mit einer Oberflächenschicht versehen werden. Wird die Seite des Rohlings mit einem Spritzgießwerkzeug beschichtet, welche beim fertigen eingebauten Auskleidungsteil sichtbar ist, so spricht man von einem Überspritzen; bei der anderen - nicht sichtbaren - Seite spricht man entsprechend von einem Hinterspritzen. Auskleidungsteile können etwa in diesem Sinne von hinten beschichtet sein, um ihnen eine größere Stabilität zu verleihen oder Montagelemente auszubilden; sie können von vorne beschichtet sein, um eine bestimmte Oberflächenbeschaffenheit der im eingebauten Zustand sichtbaren Seite des Auskleidungsteils herzustellen.

Ein übliches Spritzgießwerkzeug ist so gebaut, dass es im geschlossenen Zustand den Rohling umfasst und der Teil der Oberfläche des Rohlings, welcher beschichtet werden soll, an eine Kavität des geschlossenen Spritzgießwerkzeuges angrenzt. Diese Kavität wird dann mit dem Spritzgießmaterial gefüllt; im Anschluss daran (ggf. nach einer Aushärtezeit) kann das Spritzgießwerkzeug geöffnet und der beschichtete Rohling entnommen werden.

Die EP 1 676 688 A1 zeigt ein Verfahren zur Herstellung von Auskleidungsteilen für Motorfahrzeuge. Eine thermoplastische Trägerschicht wird außerhalb des Spritzgusswerkzeugs vorgeheizt und zusammen mit einer Dekorschicht in das Werkzeug eingebracht und verpresst, wobei die Restwärme der Trägerschicht eine dauerhafte Verbindung beider Teile, etwa mittels eines optional vorhandenen Trockenklebefilms, ermöglicht. Danach wird der Trägerschicht eine rippenartige Struktur hinterspritzt.

Die US 6.887.413 B1 offenbart ein Verfahren zur Herstellung von Dekor- und Auskleidungsteilen, welches ein nachträgliches Zuschneiden des fertigen Dekorteils überflüssig macht. Eine erhöhte Spritzaussmaterialtemperatur und eine erhöhte Werkzeugtemperatur von jeweils 150 °C sorgen hierbei für eine verbesserte Verformbarkeit und ein verbessertes Aushärten einer optional vorhandenen Wärmeschutz- bzw. Kleberschicht. Dieses Dokument liegt dem Oberbegriff des Anspruchs 1 zugrunde.

Die JP 03 030921 A präsentiert ein Verfahren zur Herstellung von Spritzgussteilen mit Holzfurnier. Das Holz wird zusammen mit einer Schutzplatte im Spritzgusswerkzeug in Form gepresst und der Schutzplatte eine tragende Struktur hinterspritzt.

Die WO 2004/073951 A1 stellt ein Verfahren zur Herstellung von hinterspritzten Dekorteilen, welche besonders gut recyclebar sind. Letztere bedingt die Abwesenheit von Klebeschichten. Die einzelnen Rohstofflagen werden durch teilweises Aufschmelzen miteinander verbunden, wobei die dazu notwendige Wärme durch das erhitzte Formmaterial zugeführt wird. Um hitzebedingte Schäden an der später sichtbaren Oberfläche zu vermeiden, wird das Werkzeug an entsprechenden Stellen gekühlt.

Die EP 659 770 erwähnt für den Spritzguss von ABS-Material eine Formwerkzeugtemperatur von 40 °C bis 90 °C.

Der vorliegenden Erfindung liegt das technische Problem zugrunde, ein verbessertes Verfahren zur Herstellung eines Auskleidungsteils für Motorfahrzeuge anzugeben.

Die Erfindung bezieht sich auf ein Verfahren zur Herstellung eines Auskleidunosteils für Motorfahrzeuge mit den Schritten: Zusammenstellen von Rohstofflagen, Einbringen der Rohstofflagen mit einem Kleber zwischen den Rohstofflagen in ein Formwerkzeug, so dass die Rohstofflagen in dem Formwerkzeug einen Stapel bilden und zumindest ein Teil der Oberfläche des Stapels an eine Kavität des geschlossenen Formwerkzeuges angrenzt. Einbringen eines Formmaterials in die Kavität und Verkleben der vor dem Einbringen des Formmaterials noch unverbundenen Rohstofflagen des Stapels in dem Formwerkzeug unter Wärmezufuhr und Druck, wobei die Temperatur des Formwerkzeugs zwischen 60 °C und 190 °C beträgt, und unter Verwendung eines Schmelzklebers auf Polyurethanbasis oder eines kunstharzgebundenen Klebefilms auf Phenol-, Melamin- und/oder Harnstoffbasis, dadurch gekennzeichnet dass dem Stapel für zumindest 120 s Wärme-zugeführt wird und er zeitgleich für zumindest 120 s unter Druck gesetzt wird.

Bevorzugte Ausgestaltungen der Erfindung sind in den abhängigen Ansprüchen angegeben und werden im Folgenden näher erläutert. Die Offenbarung bezieht sich dabei stets sowohl auf das erfindungsgemäße Verfahren als auch grundsätzlich auf ein Formwerkzeug zur Durchführung des erfindungsgemäßen Verfahrens.

Die Begriffe "Formwerkzeug" und "Formmaterial" entsprechen Verallgemeinerungen der Begriffe "Spritzgießwerkzeug" und "Spritzgießmaterial". Spritzgießen wird üblicherweise unter Wärmezufuhr und unter Druck ausgeführt.

Die Erfindung basiert auf der Feststellung, dass das Verkleben eines Rohlings vorteilhafterweise sowohl unter der Zufuhr von Wärme als auch unter Druck erfolgen kann. Sie basiert auf der weiteren Feststellung, dass das Beschichten des Rohlings mit einem Formmaterial in einem Formwerkzeug ebenfalls vorteilhafterweise unter Wärmezufuhr und unter Druck erfolgen kann.

Bei der Herstellung eines Rohlings sind Wärme und Druck Parameter, welche das Verkleben der Rohstofflagen miteinander über den zwischen den Rohstofflagen befindlichen Kleber beeinflussen. Oft wird dabei dem Rohling über die Ausübung von Druck auch eine bestimmte Form gegeben (s. bevorzugte Ausgestaltung unten). Bei der Beschichtung des Rohlings mit einem Formmaterial in einem Formwerkzeug bestimmen die Größen Druck und Temperatur vor allem den Fluss des Formmaterials.

Es gibt zahlreiche Kleber, welche sich zum Verkleben der Rohstofflagen in einem Formwerkzeug eignen. Sie basieren auf unterschiedlichen Stoffen mit entsprechend unterschiedlichen Eigenschaften. So muss beispielsweise für Schmelzklebefilme (ein so genannter "Hotmeld" - meist auf Polyurethanbasis) lediglich eine ausreichend hohe Temperatur gewährleistet werden, während etwa für Kontaktklebefilme (meist auf Acrylat- als auch auf Polyurethanbasis) der Druck ein entscheidender Parameter ist. Für zahlreiche Kleber ist sowohl eine erhöhte Temperatur als auch ein erhöhter Druck wünschenswert, etwa für kunstharzgebundene Klebefilm auf Phenol-, Melamin- und/oder auf Harnstoffbasis.

Die der Erfindung zugrunde liegende Idee ist es, das Verkleben des Rohlings aus mehreren Rohstofflagen mit dem Beschichten desselben mit einem Formmaterial zu verbinden.

Dazu werden die einzelnen Rohstofflagen zunächst lose aneinander gelegt, wobei zwischen zumindest zwei Rohstofflagen ein Kleber eingebracht wird. Der so aufgeschichtete Stapel liegt bei geschlossenem Formwerkzeug mit einem Teil seiner Oberfläche an einer Kavität desselben an. In die Kavität wird das Formmaterial eingebracht. Bei geschlossenem Formwerkzeug werden dann die zuvor noch unverbundenen Rohstofflagen des Stapels unter Druck und Wärmezufuhr miteinander verklebt.

"Unverbunden" steht hier nicht nur für ein loses Aneinanderanliegen von Rohstofflagen, sondern umfasst beispielsweise auch den Fall, dass etwa der zwischen den Rohstofflagen befindliche Kleber den Stapel bereits locker oder nur an einzelnen Stellen zusammenhält. Das Wort "unverbunden" bezeichnet hier jeden Zusammenhalt des Stapels, welcher deutlich weniger belastbar ist als der eines fertig verklebten Stapels.

Für den Fall, dass dem Stapel Wärme zugeführt wird, kann dies über erwärmtes Formmaterial geschehen, aber auch über eine Erwärmung des Formwerkzeuges. Erfindungsgemäß weist das Formwerkzeug eine Temperatur zwischen 120 °C und 130 °C.

Der Druck auf den Stapel kann bei dem und durch das Einbringen des Formmaterials geschehen. Der Druck kann aber auch unabhängig von dem Einbringen des Formmaterials ausgeübt werden. Dazu kann beispielsweise zunächst das Formmaterial in die Kavität eingebracht, können vorhandene Zu- und Abflüsse für das Formmaterial geschlossen und kann dann über das Formwerkzeug der Stapel zusammengepresst werden. Erfindungsgemäß wird der Stapel für zumindest 120 s bei erhöhter Temperatur unter Druck gesetzt.

Das erfindungsgemäße Verfahren eignet sich sowohl für eine Beschichtung der Vorderseite als auch der Rückseite des Rohlings. Ist das Formwerkzeug ein Spritzgießwerkzeug, so heißt dies, dass die Erfindung sich sowohl für das Über- als auch für das Hinterspritzen, und für die Kombination aus beidem, eignet. Für das Beschichten der Oberseite, etwa mittels Überspritzen, werden üblicherweise transparente Kunststoffe verwendet, etwa transparente Thermoplaste wie PMMA (Polymethylmetacrylat), PC (Polycarbonat) und SAN (Styrol/Acrylnitril). Wird der Stapel nur auf seiner Vorderseite beschichtet, wird er oft auf seiner anderen Seite noch mit einem Träger versehen, etwa einem Träger aus Metall, beispielsweise Aluminium, oder aus Kunststoff. Der Träger kann dem Auskleidungsteil zusätzliche Stabilität verleihen.

Für das Beschichten des Stapels von hinten, etwa mittels Hinterspritzen, können nichttransparente Kunststoffe verwendet werden, da sie beim eingebauten Auskleidungsteil der Sichtseite abgewandt sind. Es empfiehlt sich, hier technische Kunststoffe mit einem hohen E-Modul zu verwenden, um ein hinreichend stabiles Auskleidungsteil herzustellen. Dies können etwa ABS (Acrylnitril-Butadien-StyrolCopolymerisat) oder ABS/PC-Kunststoffe sein. Wird der Stapel sowohl von vorne als auch von hinten beschichtet, kann für beide Seiten das gleiche Material verwendet werden. Dies ist jedoch nicht notwendig der Fall.

Der Stapel kann Rohstofflagen aus verschiedensten Materialien umfassen, etwa Holzfurniere, wobei auch die Verwendung mehrerer, auch unterschiedlicher, Holzfurniere in einem Stapel sinnvoll sein kann, etwa als Deckfurnier und als Unterfumier. Das Deckfumier bestimmt dabei wesentlich das spätere Erscheinungsbild des Auskleidungsteils mit, während das Unterfurnier Einfluss auf die mechanischen Eigenschaften des Auskleidungsteils nimmt. Der Stapel kann aber auch beispielsweise Blechfolien, Holzfasermatten und Kunststofffolien aufweisen, welche je nach den gewünschten mechanischen und ästhetischen Eigenschaften eher zur Stabilisierung des Auskleidungsteils oder eher zur ästhetischen Ausgestaltung desselben eingebracht werden.

Die Erfindung macht das gesonderte Verkleben eines Rohlings vor dem Beschichten mit einem Formmaterial überflüssig. Das Verkleben des Rohlings und das Beschichten können nun zusammen in einem einzigen Werkzeug durchgeführt werden.

Vorzugsweise wird das Verkleben des Stapels unter Druck und unter Zufuhr von Wärme mit Hilfe eines an sich allgemein bekannten Spritzgießwerkzeuges durchgerührt.

Üblicherweise weisen fertige Rohlinge auch eine bestimmte Formgebung auf, welche im Wesentlichen der des fertigen Auskleidungsteils entspricht. Das Formen von Rohlingen basiert zumindest auf dem Ausüben von Druck. Daher wird bei dem erfindungsgemäßen Verfahren vorzugsweise der Stapel unter Druckzufuhr in dem Formwerkzeug umgeformt. Bei dieser Ausgestaltung der Erfindung wird also der Rohstofflagenstapel in dem Formwerkzeug verklebt und umgeformt.

Auskleidungsteile, welche eine Holzmaserung zeigen, sind besonders beliebt. Weiter sind Holzfumiere als Rohstofflage für das erfindungsgemäße Verfahren überhaupt geeignet. Dies gilt sowohl für den Einsatz eines Holzfumiers als Deckfumier, als auch für den Einsatz als ein innerhalb des Stapels liegendes Unterfurnier, welches die Stabilität des Auskleidungsteils mitbestimmt. Daher ist es bevorzugt, Holzfumiere als Rohstofflage zu verwenden.

Vorzugsweise werden Trockenklebefilme zwischen den Rohstofflagen als Kleber eingesetzt. Dies können etwa Kunstharzklebefilme sein, etwa Klebefilme auf Phenol-, Melamin- oder Hamstoffbasis. Trockenklebefilme sind besonders leicht zu handhaben.

Vorzugsweise sollte der Stapel einem Druck von zumindest 1,5 N/mm² ausgesetzt sein. Bevorzugter ist ein Druck von zumindest 2 N/mm². Entsprechende Drücke haben sich in Versuchen bewährt.

Es ist bevorzugt, dem Stapel Wärme über erwärmtes Formmaterial zuzuführen. Vorzugsweise beträgt die Temperatur des Formmaterials dabei zwischen 130°C und 390 °C. Bevorzugter ist eine Temperatur zwischen 190-°C und 330-°C und noch bevorzugter eine Temperatur zwischen 240 °C und 280 °C. Idealerweise weist das eingebrachte Formmaterial eine Temperatur zwischen 250 °C und 270 °C auf.

Dem Stapel kann auch über das Werkzeug selbst Wärme zugeführt werden. Vorzugsweise weist das Formwerkzeug eine Temperatur zwischen 90 °C und 160 °C auf. Noch bevorzugter weist es eine Temperatur zwischen 110 °C und 140 °C auf. Idealerweise beträgt die Temperatur des Formwerkzeugs zwischen 120 °C und 130 °C.

Damit die Rohstofflagen und ggf. die Trockenklebefilme nicht vor ihrer Verklebung und Beschichtung exakt in Form geschnitten werden müssen, ist es vorteilhaft, wenn der Stapel mit dem Formwerkzeug selbst in Form geschnitten wird. Dazu kann das Formwerkzeug eine scharfe Kante aufweisen, welche beim Schließen desselben überflüssige Teile des Stapels abtrennt.

Im Folgenden soll die Erfindung anhand von Ausführungsbeispielen näher erläutert werden. Die dabei offenbarten Einzelmerkmale können auch in anderen Kombinationen erfindungswesentlich sein.
- Figur 1: zeigt ein erfindungsgemäßes Spritzgießwerkzeug als Formwerkzeug zum Hinterspritzen mit Ober- und Unterform und einen Stapel Rohstoff- lagen, jeweils zur erfindungsgemäßen Herstellung eines Auskleidungs- teiles.
- Figur 2: zeigt das Spritzgießwerkzeug aus Figur 1 in seinern geschlossenen Zustand.
- Figur 3: zeigt ein hinterspritztes Auskleidungsteil als Erzeugnis des erfindungs- gemäßen Verfahrens unter Verwendung des Spritzgießwerkzeuges aus den Figuren 1 und 2.
- Figur 4: entspricht Figur 2 mit dem Unterschied, dass das ebenfalls erfindungs- gemäß Spritzgießwerkzeug zum Überspritzen ausgelegt ist.
- Figur 5: zeigt ein überspritztes Auskleidungsteil als Erzeugnis des erfindungs- gemäßen Verfahrens unter Verwendung des Spritzgießwerkzeuges aus Figur 4.
- Figur 6: entspricht den Figuren 2 und 4 mit dem Unterschied, dass das Spritz- gießwerkzeug zum Über- und Hinterspritzen ausgelegt ist.
- Figur 7: zeigt ein über- und hinterspritztes Auskleidungsteil als Erzeugnis des erfindungsgemäßen Verfahrens unter Verwendung des Spritzgießwerk- zeuges aus Figur 6.

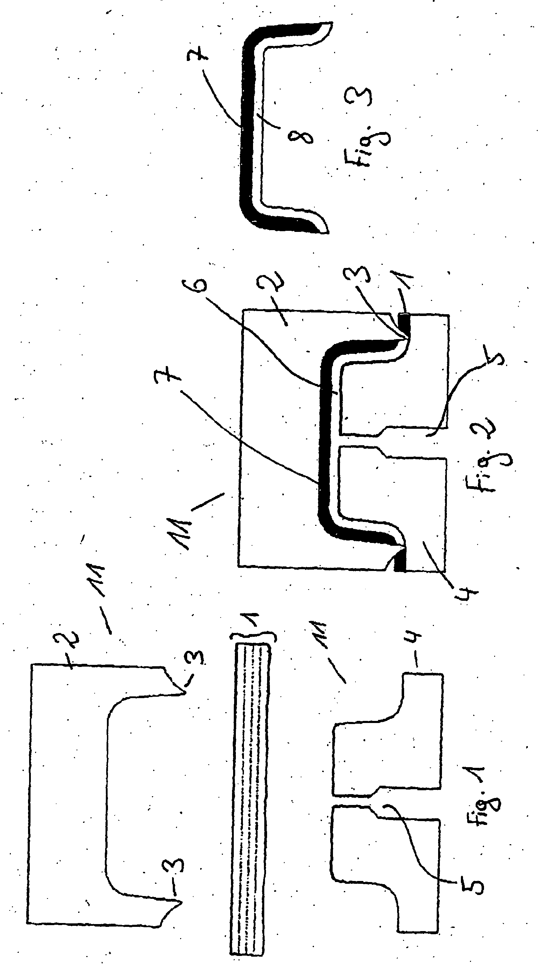

Figur 1 zeigt mittig einen Stapel 1 Röhstofflagen, welche lose aufeinander liegen. Zu oberst befindet sich ein hölzernes Deckfumier und darunter drei hölzerne Unterfurniere. Zwischen den Furnieren ist jeweils ein Melaminkunstharzklebefilm eingelegt.

Oberhalb des Stapels 1 ist eine Oberform 2 eines Spritzgießwerkzeugs 11 dargestellt. Der Begriff "Oberform" zeigt lediglich an, dass sie auf der Seite des Stapels 1 liegt, welche bei dem fertigen Ausstattungsteil dem Betrachter zugewandt ist. Die Oberform 2 weist zwei scharfe Kanten 3 auf. Unten ist eine Unterform 4 dargestellt. Die "Unterform" 4 liegt als Gegenstück der "Oberform" 2 auf der Seite des Stapels 1, welche bei dem fertigen Auskleidungsteil dem Betrachter abgewandt ist.

Die Unterform 4 weist hier eine Spritzgießdüse 5 zum Einbringen von Spritzgießmaterial auf. Zunächst wird der Stapel 1 zwischen der Oberform 2 und der Unterform 4 positioniert und werden dann die Oberform 2 und die Unterform 4 zusammengeführt. Dabei drückt die Oberform 2 den Stapel 1 gegen die Unterform 4 und die Kanten 3 trennen überflüssige Teile des Stapels 1 ab (sog. Abzwicken).

Figur 2 zeigt das Sprizgießwerkzeug 11 aus Figur 1 im geschlossenen Zustand. Die Oberform 2 liegt nun auf der Unterform 4 auf und die Kanten 3 haben von dem Stapel 1 jeweils den überschüssigen Teil abgetrennt.

Zum Spritzgießen wird hier durch die Spritzgießdüse 5 260 °C heißes ABS mit einem Druck von 4,0 N/mm² in eine unterformseitig gelegene Kavität 6 des Spritzgießwerkzeuges eingebracht. Die Oberform 2 und die Unterform 4 weisen dabei eine Temperatur von 125 °C auf. Der Druck in der Kavität 6 wird 240 s gehalten. Im Anschluss daran ist aus dem losen Stapel 1 ein wunschgemäß geformter und innig verklebter Verbund 7 geworden. Dieser Verbund 7 ist in Figur 2 gezeigt.

Figur 3 zeigt das Erzeugnis des anhand Figur 2 erläuterten Verfahrens. Der Verbund 7 ist mit einer ABS-Schicht 8 hinterspritzt.

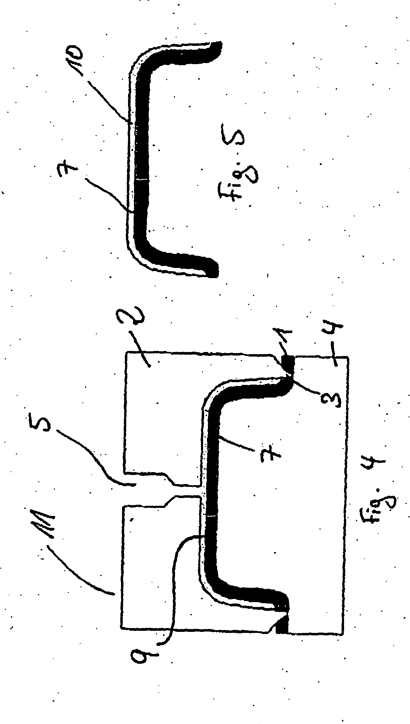

Figur 4 zeigt wie Figur 2, unter Beibehaltung der Bezugszeichen für einander entsprechende Merkmale, ein Spritzgießwerkzeug 11 mit einer Oberform 2, einer Unterform 4, einer Spritzgießdüse 5 und Kanten 3 an der Oberform 2. Im Unterschied zu

Figur 2 befindet sich die Spritzgießdüse 5 nun in der Oberform 2, entsprechend ist in diesem Spritzgießwerkzeug 11 eine Kavität 9 oberformseitig zum Überspritzen ausgebildet. Bei diesem Spritzgießwerkzeug wird durch die Spritzgießdüse 5 PMMA in die Kavität 9 eingebracht. Ansonsten gilt das zu Figur 2 Gesagte.

Figur 5 zeigt einen mit einer PMMA-Schicht 10 überspritzten Verbund 7.

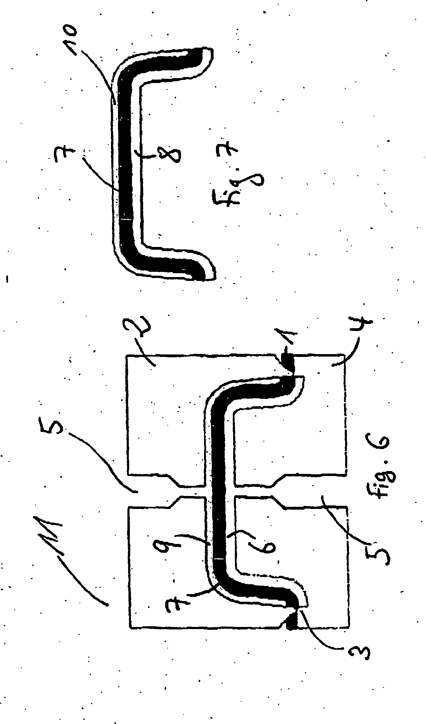

Figur 6 zeigt ein Spritzgießwerkzeug 11, welches zum Über- und Hinterspritzen ausgelegt ist. Bezugszeichen, welche sich auf entsprechende Merkmale aus den Figuren 2 und 4 beziehen, werden aus diesen übernommen. Auch hier ist ein Spritzgießwerkzeug mit einer Oberform 3 und einer Unterform 4 gezeigt. Hier weisen sowohl die Oberform 2 als auch die Unterform 4 jeweils eine Spritzgießdüse 5 auf. Die Spritzgießdüse 5 der Oberform 3 mündet in eine Kavität 9 und die Spritzgießdüse 5 der Unterform 4 mündet in eine Kavität 6. Zwischen den Kavitäten 6 und 9 ist ein wie oben beschriebener Verbund 7 eingezeichnet. Für das Überspritzen gilt das zu Figur 4 Gesagte und für das Hinterspritzen das zu Figur 2 Gesagte.

Die Darstellung dieses Spritzgießwerkzeuges 11 ist stark vereinfacht. Die beiden Kavitäten 6 und 9 werden aufeinander folgend gebildet. Für ein beidseitiges Beschichten kann etwa eine der Formen ausgetauscht werden (vgl. auch die DE 43 01 444 C2).

Figur 7 zeigt ein mit dem Spritzgießwerkzeug aus Figur 6 hergestelltes Auskleidungsteil, bei dem der Verbund 7 mit PMMA überspritzt 10 und mit ABS hinterspritzt 8 ist.

## Patentansprüche

1. Verfahren zur Herstellung eines Auskleidungsteils für Motorfahrzeuge mit den Schritten:
Zusammenstellen von Rohstofflagen,
Einbringen der Rohstofflagen mit einem Kleber zwischen den Rohstofflagen In ein Formwerkzeug (11), so dass die Rohstofflagen in dem Formwerkzeug (11) einen Stapel (1) bilden und zumindest ein Teil der Oberfläche des Stapels (1) an eine Kavität (6, 9) des geschlossenen Formwerkzeuges (11) angrenzt,
Einbringen eines Formmaterials in die Kavität (6,9) und
Verkleben der vor dem Einbringen des Formmaterials noch unverbundenen Rohstofflagen des Stapels (1) in dem Formwerkzeug (11) unter Wärmezufuhr und Druck, wobei die Temperatur des Formwerkzeugs zwischen 60 °C und 190 °C beträgt, und unter Verwendung eines Schmelzklebefilms auf Polyurethanbasis oder eines kunstharzgebundenen Klebefilms auf Phenol-, Melamin- und/oder Harnstoffbasis,
**dadurch gekennzeichnet, dass** dem Stapel (1) für zumindest 120 s Wärme zugeführt wird und er zeitgleich für zumindest 120 s unter Druck gesetzt wird.

2. Verfahren nach Anspruch 1, bei dem der Stapel (1) auch umgeformt wird.

3. Verfahren nach einem der vorangehenden Ansprüche, bei dem eine der Rohstofflagen ein Holzfurnier ist.

4. Verfahren nach einem der vorangehenden Ansprüche, bei dem der Kleber ein Trockenklebefilm ist.

5. Verfahren nach einem der vorangehenden Ansprüche, bei dem der Stapel (1) einem Druck von zumindest 1,5 N/mm² ausgesetzt wird.

6. Verfahren nach einem der vorangehenden Ansprüche, bei dem die Temperatur des eingebrachten Formmaterials zwischen 130 °C und 390°C beträgt.

7. Verfahren nach einem der vorangehenden Ansprüche, bei dem die Temperatur des Formwerkzeugs (11) zwischen 90 °C und 160 °C beträgt.

8. Verfahren nach einem der vorangehenden Ansprüche, bei dem mit dem Formwerkzeug (11) der Stapel (1) auf die gewünschte Ausdehnung zugeschnitten wird.

## Claims

1. A method of producing a covering part for motor-vehicles, comprising the steps:
collecting raw material layers
introducing said raw material layers together with an adhesive between said raw material layers into a mould (11) such that said raw material layers in said mould (11) form a pile (1) and at least a part of the surface of said pile (1) is adjacent to a cavity (6, 9) of the closed mould (11),
introducing a moulding material into said cavity (6, 9) and
glueing said raw material layers of said pile (1), not yet connected before introducing said moulding material, in said mould (11) by supplying heat and pressure, wherein the temperature of the mould is between 60 °C and 190 °C, and by applying a hot-melt adhesive film on the basis of polyurethane or a synthetic-resin-bound adhesive film on the basis of phenol-, melamine- and/or urea
**characterized in that** heat is supplied to said pile (1) for at least 120 s and that said pile is simultaneously pressurized for at least 120 s.

2. The method of one of the preceding claims wherein said pile (1) is changed in its shape by said moulding as well.

3. The method of one of the preceding claims wherein one of said raw material layers is a wood veneer.

4. The method of one of the preceding claims wherein said adhesive is a try adhesive film.

5. The method of one of the preceding claims wherein said pile (1) is pressurised by a pressure of at least 1.5 N/mm².

6. The method of one of the preceding claims wherein the temperature of said moulding material introduced is between 130 °C and 390 °C.

7. The method of one of the preceding claims wherein the temperature of said mould (11) is between 90 °C and 160 °C.

8. The method of one of the preceding claims wherein said pile (1) is cut-to-size by said mould (11).

## Revendications

1. Procédé pour fabriquer une partie de revêtement pour des véhicules à moteur comprenant les étapes:
assemblage de couches de matière première,
introduction des couches de matière première avec une colle entre les couches de matière première dans un outil de moulage (11), de sorte que les couches de matière première forment une pile (1) dans l'outil de moulage (11) et au moins une partie de la surface de la pile (1) est contiguë à une cavité (6, 9) de l'outil de moulage (11) fermé,
introduction d'un matériau de moulage dans la cavité (6,9), et
collage des couches de matière première, non encore reliées avant l'introduction du matériau de moulage, de la pile (1) dans l'outil de moulage (11) avec apport de chaleur et pression, la température de l'outil de moulage se situant entre 60 °C et 190 °C et avec l'utilisation d'un film de colle fusible à base de polyuréthane ou d'un film de colle lié par résine synthétique à base de phénol, de mélamine et/ou d'urée,
**caractérisé en ce que** de la chaleur est amenée à la pile (1) pour au moins 120 s et elle est mise sous pression simultanément pour au moins 120 s.

2. Procédé selon l'une quelconque des revendications précédentes, avec lequel la pile (1) est également moulée.

3. Procédé selon l'une quelconque des revendications précédentes, avec lequel l'une des couches de matière première est un placage de bois.

4. Procédé selon l'une quelconque des revendications précédentes, avec lequel la colle est un film de colle sec.

5. Procédé selon l'une quelconque des revendications précédentes, avec lequel la pile (1) est exposée à une pression d'au moins 1,5 N/mm².

6. Procédé selon l'une quelconque des revendications précédentes, avec lequel la température du matériau de moulage introduit se situe entre 130 °C et 390 °C.

7. Procédé selon l'une quelconque des revendications précédentes, avec lequel la température de l'outil de moulage (11) se situe entre 90 °C et 160 °C.

8. Procédé selon l'une quelconque des revendications précédentes, avec lequel la pile (1) est adaptée à l'extension souhaitée avec l'outil de moulage (11).
